(19) Europäisches Patentamt / European Patent Office / Office européen des brevets

(11) **EP 3 885 321 A1**

(12) **EUROPEAN PATENT APPLICATION**

(43) Date of publication:
**29.09.2021 Bulletin 2021/39**

(51) Int Cl.:
*C01G 53/00* (2006.01)     *H01M 4/525* (2010.01)
*H01M 10/0525* (2010.01)

(21) Application number: **21164263.2**

(22) Date of filing: **23.03.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.03.2020   CN 202010232140**

(71) Applicant: **Ningde Amperex Technology Limited Ningde, Fujian 352100 (CN)**

(72) Inventor: **YUE, Yingying
Ningde City,, Fujian Province, 352100 (CN)**

(74) Representative: **Klunker IP
Patentanwälte PartG mbB
Destouchesstraße 68
80796 München (DE)**

(54) **POSITIVE ACTIVE MATERIAL AND ELECTROCHEMICAL DEVICE CONTAINING SAME**

(57)    A positive active material, wherein, based on an initial lithium content of the positive active material, a delithiation percentage of the positive active material is t, and

in a process from a start of delithiation of the positive active material to the delithiation percentage reaching t, a difference between a maximum value and a minimum value of a 2θ angle of a (003) peak of the positive active material in an in-situ X-ray diffraction pattern is not greater than 1.2°, wherein 80% ≤ t ≤ 93%. The electrochemical device that adopts the foregoing positive active material can achieve excellent electrochemical performance, especially reduce gas generation and improve cycle stability of the electrochemical device.

FIG. 1

Printed by Jouve, 75001 PARIS (FR)

**Description**

**TECHNICAL FIELD**

This application relates to the technical field of energy storage, and in particular, to a positive active material and an electrochemical device that applies the positive active material.

**BACKGROUND**

With the popularization and application of smart products, people's demand for electronic products such as a mobile phone, a notebook computer, and a camera is increasing every year. An electrochemical device serving as a power supply of the electronic products is increasingly important in our daily lives. By virtue of advantages such as a high specific energy, a high working voltage, a low self-discharge rate, a small size, and a light weight, lithium-ion batteries are widely applied in the field of consumer electronics.

However, with the wide application of the electrochemical devices in electric vehicles, mobile electronic devices, and unmanned aerial vehicles, people have imposed higher requirements on the electrochemical devices. Using electric vehicles as an example, people require an electric vehicle to have a long cruising range, thereby requiring an energy device in the electric vehicle to have a high energy density. In addition, people require the energy device to have a long service life, thereby requiring a capacity of the energy device not to fade rapidly with the increase of charge and discharge cycles. To meet such requirements, synthesis of positive and negative electrode materials of a high specific capacity and high cycle stability has become one of hot research topics in recent years.

**SUMMARY**

This application provides a positive active material and an electrochemical device that applies the positive active material in an attempt to solve at least one problem in the related art to at least some extent.

According to an aspect of this application, this application provides a positive active material. Based on an initial lithium content of the positive active material, a delithiation percentage of the positive active material is t. In a process from a start of delithiation of the positive active material to the delithiation percentage reaching t, a difference between a maximum value and a minimum value of a $2\theta$ angle of a (003) peak of the positive active material in an in-situ X-ray diffraction pattern is not greater than 1.2°, where $80\% \leq t \leq 93\%$.

According to an embodiment of this application, in the process from the start of delithiation of the positive active material to the delithiation percentage reaching t, a range of a unit cell parameter c is 13.30 Å to 14.52 Å, and a range of a unit cell parameter a is 2.81 Å to 2.89 Å.

According to an embodiment of this application, in a fully charged state, a range of a ratio of the unit cell parameter c to the unit cell parameter a is 4.86 to 4.95.

According to an embodiment of this application, the positive active material is of a hexagonal crystal structure; and, based on a volume of a unit cell of the positive active material in a fully discharged state, a decrease percentage of the volume of the unit cell is less than or equal to 9% in the process from the start of delithiation of the positive active material to the delithiation percentage reaching t.

According to an embodiment of this application, when $0 < t \leq 70\%$, the unit cell parameter c of the positive active material increases as t increases; and, when $t > 70\%$. the unit cell parameter c of the positive active material decreases as t increases.

According to an embodiment of this application, in a DQ/DV curve at a 0.1 C-rate, a first oxidation peak exists between 4.15 V and 4.25 V, a second oxidation peak exists between 3.85 V and 4.1 V, a peak intensity of the first oxidation peak is $I_{H2+H3}$, a peak intensity of the second oxidation peak is $I_{M+H2}$, and $0 < I_{H2+H3}/I_{M+H2} \leq 3$.

According to an embodiment of this application, the positive active material includes at least one compound represented by a formula $Li_{l+a}Ni_xMn_yCo_zM_{l-x-y-z}O_2$, where $-0.05 \leq a < 0.1$, $0.8 < x < 1$, $0 < y \leq 0.15$, $0 < z \leq 0.15$, $0.9 \leq x+y+z < 1$, M includes at least two selected from the group consisting of Ti, W, Al, Nb, Mo, Sb, Zr, Ru. Ge, Y, La, Sr, Mg, In, and Ce, and a specific surface area of the positive active material is 0.1 m²/g to 1.2 m²/g.

According to another aspect of this application, this application provides an electrochemical device, including a positive electrode and an electrolytic solution, where the positive electrode includes a positive active material layer and a positive current collector, and the positive active material layer includes the positive active material described herein.

According to an embodiment of this application, the positive active material layer includes a particle A and a particle B, a circularity of the particle A is $R_A$, a cross-sectional area of the particle A is $S_A$; a circularity of the particle B is $R_B$, a cross-sectional area of the particle B is $S_B$, $R_B < 0.4 \leq R_A$ and $S_B < 20 \mu m^2 \leq S_A$; and, based on a total area of a cross section of the positive active material layer in a direction perpendicular to the positive current collector, a ratio of a total area of the particle A to a total area of the particle B is in a range of 1:9 to 8:2.

According to an embodiment of this application, a percentage of the total area of the particle A in the total area of the cross section of the positive active material layer in the direction perpendicular to the positive current collector is 5% to 40%.

According to an embodiment of this application, the electrolytic solution includes at least one of 1,3-propane sultone or lithium difluorophosphate. Based on a total mass of the electrolytic solution, a range of a mass percent of the 1,3-propane sultone is 0.01% to3%, and a range of a mass percent of the lithium difluorophosphate is 0.001 % to 1%.

According to an embodiment of this application, the electrolytic solution further includes a polynitrile compound. The polynitrile compound includes at least one of glutaronitrile, adiponitrile, 1,3,5-glutaronitrile, 1,2,3-propanetricarbonitrile, 1,3,6-hexamethylenetricarbonitrile, 1,2,6-hexamethylenetricarbonitrile, 1,2,3-tris(2-cyanoethoxy)propane, 1,2,4-tris(2-cyano ethoxy)butane, 1,1,1-tris(cyanoethoxymethylene)ethane, 1,1,1-tris(cyanoethoxymethylene)propane, 3-methyl 1,3,5-tris(cyanoethoxy)pentane, 1,2,7-tris(cyanoethoxy)heptane, 1,2,6-tris(cyanoethoxy)hexane, or 1,2,5-tris(cyanoethoxy)pentane.

According to an embodiment of this application, based on the total mass of the electrolytic solution, a range of a mass percent of the polynitrile compound is 0.01% to 3%.

According another aspect of this application, this application provides an electronic device, including the electrochemical device according to this application.

This application discloses a positive active material of a high energy density and high cycle stability, and an electrochemical device containing same. In at least one aspect, in a charge and discharge process of the electrochemical device, in contrast with the positive active material provided in the prior art, the positive active material according to this application can effectively suppress a transition from an H2 crystal phase to an H3 crystal phase in a high-delithiated state, thereby improving cycle performance of the electrochemical device and reducing gas generation.

Additional aspects and advantages of this application will be described or illustrated in part later herein or expounded through implementation of the embodiments of this application.

## DESCRIPTION OF DRAWINGS

For ease of describing the embodiments of this application, the following outlines the drawings necessary for describing the embodiments of this application or the prior art. Apparently, the drawings outlined below are only a part of embodiments in this application. Without making any creative efforts, a person skilled in the art can still obtain the drawings of other embodiments according to the structures illustrated in these drawings.

FIG. 1 shows 2θ values of a (003) peak of a positive active material at different delithiation percentages according to Embodiment 10 and Comparative Embodiment 1;
FIG. 2 shows a DQ/DV curve of an electrochemical device at a 0.1 C-rate according to Embodiment 10 and Comparative Embodiment 1;
FIG. 3 shows a bulk phase distribution diagram of Al element and Y element in a positive active material according to Embodiment 10; and
FIG. 4A and FIG. 4B show a morphology of a polycrystalline positive active material according to Embodiment 3 and a morphology of a monocrystalline-like positive active material according to Embodiment 18 respectively.

## DESCRIPTION OF EMBODIMENTS

Embodiments of this application will be described in detail below. Throughout the specification of this application, the same or similar components and the components having the same or similar functions are denoted by similar reference numerals. The embodiments described herein with reference to the accompanying drawings are illustrative and graphical in nature, and are intended to enable a basic understanding of this application. The embodiments of this application shall not be construed as a limitation on this application.

In addition, a quantity, a ratio, or another numerical value is sometimes expressed in a range format herein. Understandably, such a range format is for convenience and brevity, and shall be flexibly understood to include not only the numerical values explicitly specified and defined in the range, but also all individual numerical values or sub-ranges covered in the range as if each individual numerical value and each sub-range were explicitly specified.

In the description of specific embodiments and claims, a list of items referred to by using the terms such as "one or more of, "one or more thereof", "one or more types of" or other similar terms may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single element or a plurality of elements. The item B may include a single element or a plurality of elements. The item C may include a single element or a plurality of elements.

The term "fully discharged state" used herein means a state of an electrochemical device discharged to a voltage of 2.8 V.

## I. Positive active material

Currently, most lithium-ion batteries in the market use a lithium cobalt oxide as a positive active material. However, the cobalt element is highly toxic, costly, and scarce. Therefore, low-cobalt positive active materials are an inevitable trend in the development of electrochemical devices. In new-generation lithium-ion batteries, a positive active material with a very promising prospect of application is a nickel-containing material, especially a high-nickel material. The high-nickel material means a material in which a molar content of nickel is at least 50% based on a total content of metal elements other than metal lithium in the positive active material.

In the positive active material, a main function of nickel is to increase an energy density. In contrast with the lithium cobalt oxide, the high-nickel material contains a higher nickel content and a lower cobalt content, and therefore, has an actual capacity higher than the lithium cobalt oxide. However, in practical applications, the capacity of the high-nickel material fades rapidly during charge and discharge cycles. In addition, the high-nickel material generates gases severely due to problems such as particle ruptures, side reactions on a surface, and oxygen release. Such problems severely restrict the application of the high-nickel material in high-energy-density electrochemical devices.

Based on a lot of research, it is found in this application that a phase transition of the high-nickel material in a charge and discharge process is one of main factors that affect cycle performance of an electrochemical device. Specifically, a charging process from a fully discharged state to a fully charged state of the electrochemical device is a process in which lithium ions are deintercalated from a positive active material and intercalated, through an electrolytic solution and a separator, into a negative active material. In this process, as the lithium ions are continuously deintercalated from the positive active material, the high-nickel material undergoes an $H_1+M+H_2+H_3$ phase transition process, where H1, H2, and H3 are different morphologies of a hexagonal crystal phase and M is a monoclinic phase. When reaching a high-delithiated state (for example, based on an initial lithium content of the high-nickel material, when a delithiation percentage reaches 80% or higher), the high-nickel material will undergo an $H_2+H_3$ phase transition, leading to rapid fading of cycle performance.

Based on at least the foregoing insights into the high-nickel material, this application discloses a positive active material that can suppress the $H_2+H_3$ phase transition in a high-delithiated state, thereby improving electrochemical performance of the electrochemical device, especially reducing gas generation and improving the cycle performance of the electrochemical device.

To accurately reflect a structure of the positive active material disclosed herein, this application uses an in-situ X-ray diffraction test (hereinafter referred to as "in-situ XRD test") to represent a change in a lattice parameter of the positive active material in a charge and discharge process of the electrochemical device. In some embodiments, the electrochemical performance of the electrochemical device can be significantly improved when the positive active material meets the following conditions: based on an initial lithium content of the positive active material, a delithiation percentage of the positive active material is t; in a process from a start of delithiation of the positive active material to the delithiation percentage reaching t, a deviation of a 2θ angle (that is, a difference between a maximum value and a minimum value of the 2θ angle) of a (003) peak of the positive active material in an in-situ XRD pattern is not greater than 1.2°, where $80\% \leq t \leq 93\%$. In some embodiments, the initial lithium content of the positive active material means a lithium content of the positive active material of the electrochemical device in a fully discharged state.

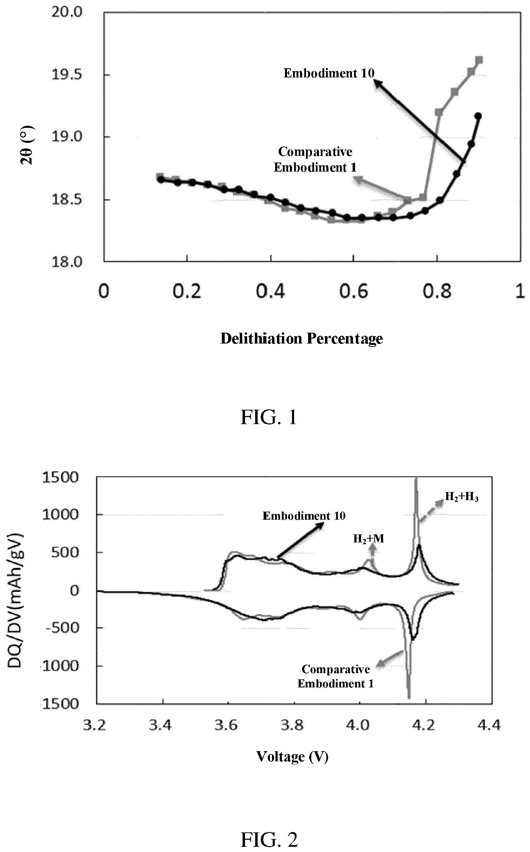

For example, FIG. 1 shows a change curve of the value of the 2θ angle of the (003) peak of the positive active material according to Embodiment 10 and Comparative Embodiment 1 of this application, where the value changes with a delithiation percentage. As can be clearly seen from FIG. 1, in a process of change of the delithiation percentage from 0.1 to 0.9, the difference (0.816) between the maximum value and the minimum value of the 2θ angle of the (003) peak of the positive active material in Embodiment 10 is significantly smaller than that (1.283) of the positive active material in Comparative Embodiment 1. In addition, as can be learned from the electrochemical data in Table 1-2, in contrast with Comparative Embodiment 1, the electrochemical device in Embodiment 10 achieves higher electrochemical performance, for example, achieves a lower thickness expansion rate and a higher capacity retention rate under high-temperature storage, and a higher capacity retention rate after 300 cycles.

In a process of charging the electrochemical device, unit cell parameters c and a of the positive active material also change within a specific range. In some embodiments, in the process from the start of delithiation of the positive active material to the delithiation percentage reaching t, a variation range of the unit cell parameter c is 13.30 Å to 14.52 Å, and a variation range of the unit cell parameter a is 2.81 Å to 2.89 Å.

In a fully charged state, in contrast with absolute values of the unit cell parameters a and c, a ratio of c to a can better reflect a structural parameter of the positive active material. That is because the c/a ratio represents layered structure characteristics of the material. A higher c/a ratio means the stronger layered structure, and is more conducive to the deintercalation and intercalation of Li⁺. In some embodiments, in the process from the start of delithiation of the positive active material to the delithiation percentage reaching t, the c/a ratio value of the unit cell parameters c and a is in a range of 4.86 to 4.96. In some embodiments, in such a process, the c/a ratio value of the unit cell parameters c and a is in a range of 4.90 to 4.96.

In some embodiments, the positive active material is of a hexagonal crystal structure; and, based on a volume of a unit cell of the positive active material in a fully discharged state, a decrease percentage of the volume of the unit cell is not greater than 9% in the process from the start of delithiation of the positive active material to the delithiation percentage reaching t. In some embodiments, based on a volume of a unit cell of the positive active material in a fully discharged state, a decrease percentage of the volume of the unit cell is not greater than 7% in the process from the start of delithiation of the positive active material to the delithiation percentage reaching t. In some embodiments, based on a volume of a unit cell of the positive active material in a fully discharged state, a decrease percentage of the volume of the unit cell is not greater than 5% in the process from the start of delithiation of the positive active material to the delithiation percentage reaching t. In some embodiments, based on a volume of a unit cell of the positive active material in a fully discharged state, a decrease percentage of the volume of the unit cell is not greater than 3% in the process from the start of delithiation of the positive active material to the delithiation percentage reaching t. When the volume of the unit cell of the positive active material shrinks to a relatively small extent in a charging process, risks of rupturing particles are reduced, the electrolytic solution is prevented from entering the particles to aggravate side reactions, gas generation is reduced, and the cycle stability of the electrochemical device is improved.

In a process of charging the electrochemical device, the unit cell parameter c of the positive active material varies with the increase of a delithiation amount. In some embodiments, based on the initial lithium content of the positive active material, when the delithiation percentage t is in a range of $0 < t \leq 70\%$, the unit cell parameter c of the positive active material increases as the delithiation amount increases. When the delithiation percentage t is in a range of t > 70%, the unit cell parameter c of the positive active material decreases as the delithiation amount increases.

A differential curve of a charge capacity Q with respect to a voltage V (that is, a DQ/DV curve) can be used to reflect a crystal phase change of the positive active material in a charge and discharge process. For example, FIG. 2 shows a DQ/DV curve of an electrochemical device at a 0.1 C-rate according to Embodiment 10 and Comparative Embodiment 1 of this application. In this curve, the y=0 line is used as a delimiter line. The curve above the delimiter line represents a curve in a charge process, and the curve below the delimiter line represents a curve in a discharge process. Referring to the curve in a charge process in FIG. 2, in a process in which lithium ions are continuously deintercalated from the positive active material, an oxidation peak (hereinafter referred to as a second oxidation peak) exists between 3.85 V and 4.1 V of the positive active material, and reflects a crystal phase change of the positive active material from an M phase to an H2 phase. In addition, an oxidation peak (hereinafter referred to as a first oxidation peak) exists in a voltage range of 4.15 V to 4.25 V of the positive active material, and reflects a crystal phase change of the positive active material from the $H_2$ phase to an $H_3$ phase.

The positive active material described in this application can effectively suppress the $H_2+H_3$ phase transition. Therefore, in the DQ/DV curve shown in FIG. 2, a peak intensity $IH_{2+H3}$ of the first oxidation peak according to Embodiment 10 is significantly lower than that according to Comparative Embodiment 1. In some embodiments, the peak intensity of the first oxidation peak of the positive active material described in this application is $I_{H2+H3}$. and the peak intensity of the second oxidation peak is $I_{M+H2}$, where the peak intensities of the two oxidation peaks satisfy $0 < I_{H2+H3}/I_{M+H2} \leq 3$.

In some embodiments, the positive active material described in this application is a nickel-containing ternary material. The term "ternary material" is a ternary material known in the art, for example, a ternary material specified in Ternary Material of Lithium-ion Batteries-Process Technology and Application in Production (by Wang Weidong, Qiu Weihua, Ding Qianqian et al., Chemical Industry Press, May 2015). In some embodiments, the nickel-containing ternary material described in this application includes lithium nickel cobalt manganese oxide.

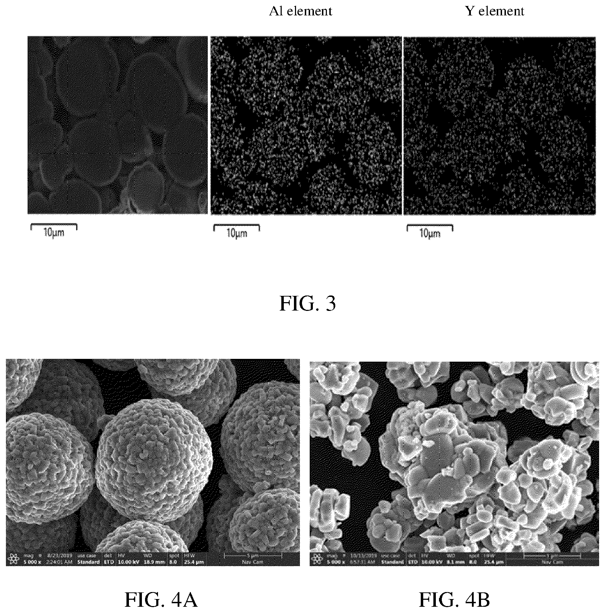

In some embodiments, the positive active material according to this application includes or is selected from at least one compound represented by a formula $Li_{l+a}Ni_x Mn_y Co_z M_{l-x-y-z}O_2$, where $-0.05 \leq a < 0.1$, $0.8 < x < 1$, $0 < y \leq 0.15$, $0 < z \leq 0.15$, $0.9 \leq x+y+z < 1$, and M includes or is at least two selected from the group consisting of Ti, W, Al, Nb, Mo, Sb. Zr, Ru, Ge. Y, La, Sr, Mg, In, and Ce. In some embodiments, the positive active material can be homogeneously doped with the M element. For example, as shown in FIG. 3, the Al element and the Y element are homogeneously distributed in a bulk phase of the positive active material according to Embodiment 10.

A particle size of the positive active material also affects electrochemical performance of the material in the electrochemical device. With a smaller particle size of the positive active material, a specific surface area of the positive active material is larger, the positive active material provides a larger quantity of electrochemically active sites, and accordingly, a specific discharge capacity of the positive active material is higher. However, too small particle size give rise to some side effects. For example, when the particle size is smaller, an exposed surface of the particles is larger, the side reactions between the particles and the electrolytic solution are severer, and the risks of rupturing the particles and generating gases are higher. Therefore, if the particle size and the specific surface area of the positive active material are controlled within an appropriate range, the electrochemical performance of the positive active material will be further optimized.

In some embodiments, the specific surface area of the positive active material described in this application is in a range of 0.05 m$^2$ /g to 2.0 m$^2$ /g. In some embodiments, the specific surface area of the positive active material described in this application is in a range of 0.1 m$^2$ /g to 1.5 m$^2$ /g. In some embodiments, the specific surface area of the positive active material described in this application is in a range of 0.1 m$^2$ /g to 1.2 m$^2$ /g. In this application, the specific surface area of the positive active material is measured by using a BET physical adsorption instrument.

## II. Electrochemical device

This application further provides an electrochemical device, including a positive electrode. The positive electrode includes a positive active material layer and a positive current collector, and the positive active material layer includes the positive active material described herein. In some embodiments, the positive current collector may be a positive current collector commonly used in the art, and may include, but is not limited to, an aluminum foil or a nickel foil.

In some embodiments of this application, the positive active material layer includes a particle A and a particle B. The particle A is a set of numerous monocrystalline particles, and a monocrystal in the particle A is a crystal inside which a plurality of particulate matters are regularly and periodically arranged in a three-dimensional space. As shown in FIG. 4A of this application, a morphology of the particle A is spherical or ellipsoidal, with a relatively high circularity and a relatively large cross-sectional area. In some embodiments of this application, the particle A is a polycrystalline particle. Compared with the particle A, the particle B is a set of monocrystals of a relatively large grain size. As shown in FIG. 4B of this application, a morphology of the particle B is irregular, with a relatively low circularity and a relatively small cross-sectional area. In some embodiments of this application, the particle B is a monocrystalline-like particle. In some embodiments, the circularity of the particle A is $R_A$, the cross-sectional area of the particle A is $S_A$, the circularity of the particle B is $R_B$, the cross-sectional area of the particle B is $S_B$, $R_B < 0.4 \leq R_A$, and $S_B < 20$ $\mu m^2 \leq m_A$.

Due to a regularly arranged crystal structure, monocrystals have superior properties such as electrical properties, thermal properties, and magnetic properties. Because the crystal grain size of the monocrystals in the particle B is relatively large, the particles B added into the positive active material at a specific percentage can further improve the electrochemical performance of the electrochemical device. In some embodiments of this application, based on a total area of a cross section of the positive active material layer in a direction perpendicular to the positive current collector, a ratio of a total area of the particle A to a total area of the particle B is in a range of 1:9 to 8:2.

In some embodiments of this embodiment, a percentage of the total area of the particle A in the total area of the cross section of the positive active material layer in the direction perpendicular to the positive current collector is 5% to 40%.

In some embodiments, the positive active material layer described in this application further includes a binder and a conductive agent in addition to the positive active material described in this application.

The binder improves bonding between particles of the positive active material, and also improves bonding between the positive active material and the positive current collector. In some embodiments, examples of the binder include but without limitation: polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly (1,1-difluoroethylene). polyethylene, polypropylene, styrene-butadiene rubber, acrylic styrene-butadiene rubber, epoxy resin, and nylon.

The conductive agent may be used to enhance conductivity of the electrode. This application may use any conductive material as the conductive agent, as long as the conductive material does not cause unwanted chemical changes. In some embodiments, examples of the conductive material include but without limitation: a carbon-based material (for example, natural graphite, artificial graphite, carbon black, acetylene black, Ketjen black, and carbon fiber), a metal-based material (for example, metal powder, metal fiber, including copper, nickel, aluminum, silver, and the like), a conductive polymer (for example, a polyphenylene derivative), and any mixture thereof.

In some embodiments, the electrochemical device described in this application further includes a negative electrode. The negative electrode includes a negative active material layer and a negative current collector, and the negative active material layer includes the negative active material described herein. The negative active material can reversibly intercalate and deintercalate lithium ions. Specific types of the negative active material are not limited, and may be selected as required. In some embodiments, the negative active material may include or be selected from one or more of the following materials: a carbonaceous material, a siliceous material, an alloy material, a composite oxide material containing lithium metal, and the like. In some embodiments, examples of the carbonaceous material include but without limitation: crystalline carbon, non-crystalline carbon, and a mixture thereof. In some embodiments, the crystalline carbon may be amorphous or flake-shaped, mini-flake-shaped, spherical or fibrous natural graphite or artificial graphite. In some embodiments, the non-crystalline carbon may be soft carbon, hard carbon, mesophase pitch carbide, calcined coke, and the like.

In some embodiments, examples of the negative active material may include, but are not limited to, at least one of natural graphite, artificial graphite, mesocarbon microbead (MCMB for short), hard carbon, soft carbon, silicon, a silicon-carbon composite, a Li-Sn alloy, a Li-Sn-O alloy, Sn, SnO, $SnO_2$, or spinel-structured lithiated $TiO_2$-$Li_4Ti_5O_{12}$, and a Li-Al alloy.

In some embodiments, the negative current collector may be a negative current collector commonly used in the art, and includes but is not limited to: a copper foil, a nickel foil, a stainless steel foil, a titanium foil, foamed nickel, foamed copper, a polymer substrate coated with a conductive metal, and any combination thereof.

In some embodiments, the negative active material layer described in this application further includes a binder and a conductive agent in addition to the negative active material described in this application. The types of the binder and the conductive agents that can be used in the negative electrode are as described above, and details are omitted here.

On the basis of modification of the positive active material, if an electrolytic system is further improved, an interface of the positive active material can be better stabilized, the side reactions between the positive active material and the electrolytic solution can be suppressed, and therefore, gas generation is reduced and the cycle performance of electrochemical device is improved. The electrolytic solution may be classed into aqueous electrolytic solutions and nonaqueous electrolytic solutions. In contrast with an aqueous electrolytic solution, an electrochemical device that adopts a nonaqueous electrolytic solution can operate in a wider voltage window, thereby achieving a higher energy density. In some embodiments, the nonaqueous electrolytic solution may include an organic solvent, a lithium salt, and an additive.

In some embodiments, the electrolytic solution according to this application includes lithium difluorophosphate. In a first charge and discharge cycle of the electrochemical device, a chemical reaction occurs between the electrolytic solution and the positive active material to form a stable solid-state electrolyte interface (SEI) film on the surface of the positive electrode. The added lithium difluorophosphate can increase the LiF content in the SEI film to enhance stability of the SEI film. In some embodiments, based on the total mass of the electrolytic solution, a range of a mass percent of the lithium difluorophosphate is 0.001 %~2%. In some embodiments, based on the total mass of the electrolytic solution, the range of the mass percent of the lithium difluorophosphate is 0.001%~1%. In some embodiments, based on the total mass of the electrolytic solution, the range of the mass percent of the lithium difluorophosphate is 0.001%~0.5%.

In some embodiments, the electrolytic solution according to this application further includes a sulfur-containing additive. The sulfur-containing additive can form a stable SEI film on the surface of the positive electrode to strengthen protection for the positive electrode and improve the cycle stability of the electrochemical device. In some embodiments, the sulfur-containing additive includes 1,3-propane sultone (PS). Based on the total mass of the electrolytic solution, a range of a mass percent of the 1,3-propane sultone is 0.01% to 3%.

In some embodiments, the electrolytic solution according to this application further includes a polynitrile compound. The polynitrile compound includes at least one of glutaronitrile, adiponitrile, 1,3,5-glutaronitrile, 1,2,3-propanetricarbonitrile, 1,3,6-hexamethylenetricarbonitrile, 1,2,6-hexamethylenetricarbonitrile, 1,2,3-tris(2-cyanoethoxy)propane, 1,2,4-tris(2-cyano ethoxy)butane, 1,1,1 -tris(cyanoethoxymethylene)ethane, 1,1,1-tris(cyanoethoxymethylene)propane, 3-methyl 1,3,5-tris(cyanoethoxy)pentane, 1,2,7-tris(cyanoethoxy)heptane, 1,2,6-tris(cyanoethoxy)hexane, or 1,2.5-tris(cyanoethoxy)pentane. In some embodiments, based on the total mass of the electrolytic solution, a range of a mass percent of the polynitrile compound is 0.01%~3%.

In some embodiments, the organic solvent in the electrolytic solution according to this application includes or is selected from at least one of: ethylene carbonate, propylene carbonate, diethyl carbonate, ethyl methyl carbonate, or dimethyl carbonate. As another improvement to this application, in some embodiments, the organic solvent in the electrolytic solution includes ethyl methyl carbonate (EMC) and dimethyl carbonate (DMC). In such embodiments, the electrolytic solution can interact with the positive active material described in this application to effectively reduce gas generation of the electrochemical device in a high-temperature environment, improve the safety performance of the electrochemical device, and improve the cyclic stability of the electrochemical device. In some embodiments, based on the total mass of the electrolytic solution, a mass percent of EMC and DMC is not greater than 20%.

In some embodiments, the lithium salt in the electrolytic solution according to this application includes or is selected from at least one of: lithium hexafluorophosphate ($LiPF_6$), lithium bistrifluoromethanesulfonimide $LiN(CF_3SO_2)_2$ (LiTFSI for short), lithium bis(fluorosulfonyl)imide $Li(N(SO_2F)_2)$ (LiFSI for short), lithium bis(oxalate) borate $LiB(C_2O_4)_2$ (LiBOB for short), lithium tetrafluorophosphate oxalate ($LiPF_4C_2O_2$), lithium difluoro(oxalate) borate $LiBF_2(C_2O_4)$ (LiD-FOB for short), or lithium hexafluorocesium oxide ($LiCsF_6$).

In some embodiments, the electrochemical device according to this application further includes a separator disposed between the positive electrode and the negative electrode to prevent short circuit. The material and the shape of the separator used in the electrochemical device in this application are not particularly limited, and may be any material and shape disclosed in the prior art. In some embodiments, the separator includes a polymer or an inorganic compound or the like formed from a material that is stable to the electrolytic solution according to this application.

In some embodiments, the separator may include a substrate layer and a surface treatment layer. In some embodiments, the substrate layer is a non-woven fabric, film, or composite film, which, in each case, have a porous structure. In some embodiments, the material of the substrate layer may include or be selected from at least one of polyethylene, polypropylene, polyethylene terephthalate, and polyimide. In some embodiments, the material of the substrate layer may include or be selected from a polyethylene porous film, a polypropylene porous film, a polyethylene non-woven fabric, a polypropylene non-woven fabric, or a polypropylene-polyethylene-polypropylene porous composite film.

The surface treatment layer may be, but is not limited to, a polymer layer, an inorganic compound layer, or a hybrid layer of a polymer and an inorganic compound.

In some embodiments, the inorganic layer may include inorganic particles and a binder. In some embodiments, the inorganic particles may include or be selected from a combination of one or more of an aluminum oxide, a silicon oxide, a magnesium oxide, a titanium oxide, a hafnium dioxide, a tin oxide, a ceria, a nickel oxide, a zinc oxide, a calcium oxide, a zirconium oxide, an yttrium oxide, a silicon carbide, a boehmite, an aluminum hydroxide, a magnesium hydroxide, a calcium hydroxide, and a barium sulfate. In some embodiments, the binder may include or be selected from a combination of one or more of a polyvinylidene fluoride, a vinylidene fluoride-hexafluoropropylene copolymer, a polyamide, a polyacrylonitrile, a polyacrylate, a polyacrylic acid, a polyacrylate, a polyvinylpyrrolidone, a polyvinyl ether, a poly methyl methacrylate, a polytetrafluoroethylene, and a polyhexafluoropropylene.

In some embodiments, the material of the polymer layer may include or be selected from at least one of a polyamide, a polyacrylonitrile, an acrylate polymer, a polyacrylic acid, a polyacrylate, a polyvinylpyrrolidone, a polyvinyl ether, a polyvinylidene fluoride, or a poly(vinylidene fluoride-hexafluoropropylene).

A person skilled in the art understands that the electrochemical device according to this application may be a lithium-ion battery or any other appropriate electrochemical device. To the extent not departing from the content disclosed herein, the electrochemical device according the embodiments of this application includes any device in which an electrochemical reaction occurs. Specific examples of the electrochemical device include all kinds of primary batteries, secondary batteries, solar batteries, or capacitors. Especially, the electrochemical device is a lithium secondary battery, including a lithium metal secondary battery, a lithium-ion secondary battery, a lithium polymer secondary battery, or a lithium-ion polymer secondary battery.

## III. Method for preparing a positive active material

According to another aspect of this application, this application use a molten salt method to prepare the positive active material described in this application.

In some embodiments, using the positive active material $Li_{l+a}Ni_xMn_yCo_zM_{l-x-y-z}O_2$ as an example, the lithium salt, nickel salt, manganese salt, and cobalt salt that have a low melting point are placed under a water bath condition of 65 °C to 95 °C according to a stoichiometric ratio specified in the foregoing molecular formula, stirred and mixed homogeneously, and then placed into a high-temperature treatment device with a temperature of T1 to bake for t1 hours, and then milled and sifted. The milled and sifted material is mixed with an M source according to the stoichiometric ratio specified in the molecular formula, placed into a high-temperature treatment device with a temperature of T2 to bake for t2 hours, and then milled and sifted. In some embodiments, M includes at least two selected from the group consisting of Ti, W, Al, Nb, Mo, Sb, Zr, Ru, Ge, Y, La, Sr, Mg, In, and Ce.

The salt that has a low melting point means a salt that can be melted under a water bath condition of 65 °C to 95 °C. A range of the temperature T1 is 200 °C to 400°C, and a range of the temperature T2 is 700 °C to 850 °C, a range of the baking time t1 is 10 h to 30 h, and a range of the baking time t2 is 10 h to 20 h. An atmosphere for the high-temperature treatment is a gas in which an oxygen concentration is not less than 80%.

The types of the lithium salt, the nickel salt, the manganese salt, and the cobalt salt are not specifically limited in this application, and may be any substance that can effectively provide a lithium element, a nickel element, a manganese element, and a cobalt element and can melt under a water bath condition, and may be flexibly selected by a person skilled in the art according to actual requirements. In some embodiments of this application, the M source may be, but is not limited to, one or more of a nitrate, a hydroxide, an oxide, a peroxide, a sulfate, or a carbonate of the element M.

## IV. Applications

The electrochemical device according to this application may be used for any purposes not particularly limited, and may be used for any purposes known in the prior art. According to some embodiments of this application, the electrochemical device according to this application may be used to make an electronic device. The electronic device includes, but is not limited to, a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game machine, a watch, an electric tool, a flashlight, a camera, a large household battery, a lithium-ion capacitor, and the like.

The following uses a lithium-ion battery as an example to further describe the technical solution of this application with reference to comparative embodiments and embodiments, but this application is not limited to such embodiments. A person skilled in the art understands that the preparation method described herein is merely exemplary. Any modification or equivalent replacement made to the technical solutions of this application without departing from the scope of the technical solutions of this application shall fall within the protection scope of this application.

## V. Embodiments

### Preparing a lithium-ion battery

According to the following method, a lithium-ion full battery is prepared by using the positive active material disclosed in the embodiments and comparative embodiments.

(1) Preparing a positive electrode: mixing the positive active material prepared according to the following embodiments and comparative embodiments, acetylene black, and polyvinylidene difluoride (PVDF) at a weight ratio of 94:3:3, fully stirring and homogeneously mixing them in N-methyl-pyrrolidone to prepare a positive electrode slurry, coating a positive current collector aluminum foil with the obtained positive electrode slurry evenly, drying the aluminum foil at 85 °C to obtain a positive active material layer, and then performing cold calendering, slitting, and cutting, and welding a positive electrode tab to obtain a positive electrode.

(2) Preparing a negative electrode: mixing artificial graphite as a negative active material, styrene butadiene rubber (SBR), and sodium carboxymethyl cellulose (CMC) at a weight ratio of 97:2:1, fully stirring and homogeneously mixing them in deionized water to make a negative electrode slurry; coating a negative current collector copper foil with the negative electrode slurry evenly, and drying the copper foil at 85 °C to form a negative active material layer, and then performing cold calendering, slitting, and cutting, and welding a negative electrode tab to obtain a negative electrode.

(3) Preparing an electrolytic solution: mixing ethylene carbonate (EC), propylene carbonate (PC), ethyl methyl carbonate (EMC), and diethyl carbonate (DEC) in a dry argon atmosphere glovebox at a mass ratio of EC:PC:EMC:DEC = 15:15:30:40, adding 3 wt% fluoroethylene carbonate, dissolving and fully stirring the mixture, and then adding a lithium salt $LiPF_6$, and mixing them homogeneously to obtain an electrolytic solution. The concentration of $LiPF_6$ is 1.10 mol/L. The weight percent in the electrolytic solution is a percent of the substance in the total weight of the electrolytic solution. The electrolytic solutions in Embodiment 1 to Embodiment 21 further contain 1.5 wt% 1,3-propane sultone (PS) and 1 wt% 1,3,6-hexanetricarbonitrile.

(4) Preparing a separator: using a polyethylene (PE) porous polymer film as a separator.

(5) Assembling a lithium-ion battery: stacking the positive electrode, the separator, and the negative electrode sequentially, placing the separator between the positive electrode and the negative electrode to serve a function of separation, and winding to obtain a bare cell; placing the bare cell into an aluminum laminated film, injecting the prepared electrolytic solution, and performing packaging and formation to make the final lithium-ion battery.

### In-situ XRD test

The In-situ XRD can be used to test a change in a lattice parameter of the positive active material delithiated to different degrees in charge and discharge cycles of the electrochemical device. Lattice parameters tested through the in-situ XRD in this application include a 2θ angle of a (003) peak of the positive active material, values of unit cell parameters a and c, and a volume of a unit cell. The test steps include: preparing a lithium-ion battery by using the positive active material, and charging and discharging the battery at a constant current of 0.2C; and using a Bruker D8 Series instrument and a copper target to measure lattice parameters of the lithium-ion battery at different delithiation percentages, with a scan angle range being 10° to 80°.

### DQ/DV test

Mounting the lithium-ion batteries disclosed in the comparative embodiments and the embodiments into a BTS-5V3A Neware instrument, and charging and discharging the lithium-ion batteries at a constant current of 0.1 C-rate to obtain a DQ/DV curve.

### BET specific surface area test

Using a nitrogen adsorption/desorption method to test the specific surface area of the positive active material disclosed in the embodiments and comparative embodiments. The test is based on the standard GB/T 19587-2017.

**Scanning electron microscope (SEM) test**

Using a scanning electron microscope (SEM) to test the positive active material powder; observing the morphology of the positive active material at an appropriate magnification, and analyzing element distribution of the sample by using a matched X-ray energy spectrometer.

**Test of circularity and cross-sectional area**

Testing the circularity of the particles of the positive active material by using a DTP-550A circularity meter and by using a least square method.

Using a laser particle size method to analyze a median particle size Dv50 of the particles of the positive active material based on the standard GB/T 19077-2016, and using the Image J software to test the cross-sectional area of the particle whose particle size is Dv50.

**Test of the percentage of the total areas of the particles A and the particles B in the total area of the cross section of the positive electrode**

Using an ion beam cross section polisher (model: JEOL-IB-09010CP) to cut the positive electrode along a direction perpendicular to the positive current collector to obtain a cross section; observing the cross section by using a scanning electron microscope at an appropriate magnifications recognizing a broken particle and an unbroken particle in a BSE mode; using the Image J software to recognize the particles A, the broken particles in the particles A, the current collector, and the cross section based on differences in circularity (circularity) and cross-sectional area (size) of the particle; and counting the total area of the particles A, the total area of the broken particles in the particles A, the area of the current collector, and the cross-sectional area. The total area of the cross section of the positive electrode is S, the total area of the particles A is $S_1$ (including the broken particles), the total area of the broken particles in the particles A is $S_2$, the area of the positive current collector is $S_3$, and a porosity is P. The area percent of the conductive agent and the binder is ignored. In this application, the circularity of the particle A is greater than or equal to 0.4, and the cross-sectional area of a single particle A is greater than or equal to 20 $\mu m^2$.

$$\text{The percentage of the total area of the particles A in the total area of the cross section} = S_1/S \times 100\%.$$

$$\text{The percentage of the total area of the broken particles in the total area of the particles A} = S_2/S_1 \times 100\%.$$

$$\text{The percentage of the total area of the particles B in the total area of the cross section} = (S-S_1-S_3)/S \times 100\%-P.$$

**Test of porosity of the positive active material layer**

Using a gas replacement method to test the porosity P of the positive active material layer, where P = (V - V0)/V × 100%, V0 is a true volume, V is an apparent volume, and the test is based on the standard GB/T 24586-2009 *Determination of*

*Apparent Density, True Density and Porosity of Iron Ores.*

**Test of a thickness change rate of the lithium-ion battery after high-temperature storage**

Storing a lithium-ion battery in the embodiments and the comparative embodiments in a 25°C constant-temperature environment for 24 hours, and measuring the thickness L1 of the lithium-ion battery by using a PPG thickness gauge, where the test pressure is 700 g and the model of the thickness gauge is PPG1000; storing the same lithium-ion battery in an 85 °C thermostat for 24 hours, and measuring the thickness L2 of the lithium-ion battery by using the PPG thickness gauge; and calculating the (L2-L1)/L1 ratio as a thickness change rate of the lithium-ion battery after high-temperature storage.

**Test of the capacity retention rate of the lithium-ion battery under high-temperature storage**

Charging a lithium-ion battery in the embodiments and the comparative embodiments in a 25 °C environment, charging the battery at a constant current of 0.5C until the voltage reaches an upper limit of 4.25 V, and then charging the battery at a constant voltage until the voltage reaches to 0.05C; discharging the battery at a constant current of 0.5C until the voltage reaches 2.8 V, and measuring the discharge capacity per gram $C_{25°C}$ of the lithium-ion battery at 25°C;

storing foregoing lithium-ion battery in an 85 °C thermostat for 24 hours, taking the battery out, and performing a charge and discharge test on the lithium-ion battery immediately according to the foregoing charge and discharge process to measure the discharge capacity per gram $C_{85°C}$ of the lithium-ion battery under an 85°C temperature; and calculating a $C_{85°C}/C_{25°C}$ ratio as the capacity retention rate of the lithium-ion battery under high-temperature storage.

**Test of charge and discharge cycles at 45 °C**

Performing the following steps to charge and discharge a lithium-ion battery disclosed in the comparative embodiments and the embodiments of this application, and calculating a cycle capacity retention rate of the lithium-ion battery:

performing a first charge and discharge cycle in an 45 °C environment; charging the lithium-ion battery at a constant voltage and a constant current of 0.5C until the voltage reaches an upper limit of 4.25 V; then discharging the lithium-ion battery at a constant current of 0.5C until the voltage reaches a cut-off voltage of 2.8 V, and recording a discharge capacity $C_1$ after the first cycle; performing 300 charge and discharge cycles according to the foregoing charge and discharge process, and recording a discharge capacity $C_{300}$ after the 300th cycle: and

using the following formula to calculate the cycle capacity retention rate of the lithium-ion battery: $(C_{300}/C_1) \times 100\%$.

The following describes in detail the specific implementation of the positive active material provided in this application.

**Embodiment 1to Embodiment 18 and Comparative Embodiments 1 to 7**

**Embodiment 1**

At the stoichiometric ratio of the molecular formula $LiNi_{0.88}Co_{0.026}Mn_{0.087}Al_{0.004}Y_{0.003}O_2$ described in Embodiment 1, preparing $Ni_{0.88}CO_{0.026}Mn_{0.087}(OH)_2$ as a precursor whose Dv50 is 12 $\mu$m, lithium hydroxide, nano-$Al_2O_3$, and nano-$Y_2O_3$, milling them evenly, calcining them at 740 °C for 12 hours, and then crushing the calcined product to obtain particles A whose Dv50 is 12$\mu$m. The specific surface area of the positive active material in Embodiment 1 is 0.31 $m^2/g$.

**Embodiment 2**

Embodiment 2 differs from Embodiment 1 in: the mixing ratio of ingredients is different, and the doping element in Embodiment 1 is replaced with Al element and Ti element; in addition, the specific surface area of the positive active material obtained in Embodiment 2 is 0.42 $m^2/g$.

**Embodiment 3**

Embodiment 3 differs from Embodiment 1 in: the mixing ratio of ingredients is different, and the doping element in Embodiment 1 is replaced with Al element and Zr element; in addition, the specific surface area of the positive active material obtained in Embodiment 3 is 0.52 $m^2/g$.

**Embodiment 4**

Embodiment 4 differs from Embodiment 1 in: the mixing ratio of ingredients is different, and the doping element in Embodiment 1 is replaced with Zr element and Y element; in addition, the specific surface area of the positive active material obtained in Embodiment 4 is 0.47 $m^2/g$.

**Embodiment 5**

Embodiment 5 differs from Embodiment 1 in: the mixing ratio of ingredients is different, and the doping element in Embodiment 1 is replaced with Zr element and Ti element; in addition, the specific surface area of the positive active material obtained in Embodiment 5 is 0.49 $m^2$/g.

**Embodiment 6**

Embodiment 6 differs from Embodiment 1 in: the mixing ratio of ingredients is different, and the doping element in Embodiment 1 is replaced with Ti element, Al element, and Zr element; in addition, the specific surface area of the positive active material obtained in Embodiment 6 is 0.36 $m^2$/g.

**Embodiment 7**

Embodiment 7 differs from Embodiment 1 in: the mixing ratio of ingredients is different, and the doping element in Embodiment 1 is replaced with Zr element and W element; in addition, the specific surface area of the positive active material obtained in Embodiment 7 is 0.45 $m^2$/g.

**Embodiment 8**

Embodiment 8 differs from Embodiment 1 in: the mixing ratio of ingredients is different; in addition, the specific surface area of the positive active material obtained in Embodiment 8 is 0.48 $m^2$/g.

**Embodiment 9**

Embodiment 9 differs from Embodiment 1 in: the mixing ratio of ingredients is different; in addition, the specific surface area of the positive active material obtained in Embodiment 9 is 0.54 $m^2$/g.

**Embodiment 10**

Embodiment 10 differs from Embodiment 1 in: the mixing ratio of ingredients is different; in addition, the specific surface area of the positive active material obtained in Embodiment 10 is 0.47 $m^2$/g.

**Embodiment 11**

Embodiment 11 differs from Embodiment 1 in: the mixing ratio of ingredients is different; in addition, the specific surface area of the positive active material obtained in Embodiment 11 is 0.52 $m^2$/g.

**Embodiment 12**

Embodiment 12 differs from Embodiment 1 in: the mixing ratio of ingredients is different; in addition, the specific surface area of the positive active material obtained in Embodiment 12 is 0.49 $m^2$/g.

**Embodiment 13**

Embodiment 13 differs from Embodiment 1 in: the mixing ratio of ingredients is different; in addition, the specific surface area of the positive active material obtained in Embodiment 13 is 0.55 $m^2$/g.

**Embodiment 14**

Embodiment 14 differs from Embodiment 1 in: the mixing ratio of ingredients is different; in addition, the specific surface area of the positive active material obtained in Embodiment 14 is 0.69 $m^2$/g.

**Embodiment 15**

Embodiment 15 differs from Embodiment I in: the mixing ratio of ingredients is different; in addition, the specific surface area of the positive active material obtained in Embodiment 15 is 0.61 $m^2$/g.

**Embodiment 16**

Embodiment 16 differs from Embodiment 1 in: the mixing ratio of ingredients is different; in addition, the specific surface area of the positive active material obtained in Embodiment 16 is 0.65 m$^2$/g.

**Embodiment 17**

At a stoichiometric ratio of $LiNi_{0.88}Co_{0.026}Mn_{0.087}Al_{0.004}Y_{0.003}O_2$, preparing $Ni_{0.88}Co_{0.026}Mn_{0.087}(OH)_2$ as a precursor whose Dv50 is 4 μm, lithium hydroxide, $Al(OH)_3$, and $Y_2O_3$, milling them evenly, calcining them at 780 °C for 14 hours, and then milling and sifting calcined product to obtain particles B whose Dv50 is 2.5 μm. The specific surface area of the positive active material obtained in Embodiment 17 is 0.81 m$^2$/g.

**Embodiment 18**

Embodiment 18 differs from Embodiment 17 in: the mixing ratio of ingredients is different, and the doping element in Embodiment 17 is replaced with Al element and Zr element; in addition, the specific surface area of the positive active material obtained in Embodiment 18 is 0.85 m$^2$/g.

**Comparative Embodiment 1**

Comparative Embodiment 1 differs from Embodiment 1 in: the ingredients are mixed at the stoichiometric ratio of the molecular formula $LiNi_{0.88}Co_{0.09}Mn_{0.03}O_2$ described in Comparative Embodiment 1, but not doped. The specific surface area of the positive active material obtained in Comparative Embodiment 1 is 0.45 m$^2$/g.

**Comparative Embodiment 2**

Comparative Embodiment 2 differs from Comparative Embodiment 1 in: the mixing ratio of ingredients is different, and the specific surface area of the positive active material obtained in Comparative Embodiment 2 is 0.49 m$^2$/g.

**Comparative Embodiment 3**

Comparative Embodiment 3 differs from Comparative Embodiment 1 in: the mixing ratio of ingredients is different, and the specific surface area of the positive active material obtained in Comparative Embodiment 3 is 0.55 m$^2$/g.

**Comparative Embodiment 4**

Comparative Embodiment 4 differs from Comparative Embodiment 1 in: the mixing ratio of ingredients is different, and the specific surface area of the positive active material obtained in Comparative Embodiment 4 is 0.7 m$^2$/g.

**Comparative Embodiment 5**

Comparative Embodiment 5 differs from Comparative Embodiment 1 in: the mixing ratio of ingredients is different, and the specific surface area of the positive active material obtained in Comparative Embodiment 5 is 0.61 m$^2$/g.

**Comparative Embodiment 6**

Comparative Embodiment 6 differs from Comparative Embodiment 1 in: the mixing ratio of ingredients is different, and the specific surface area of the positive active material obtained in Comparative Embodiment 6 is 0.65 m$^2$/g.

**Comparative Embodiment 7**

Comparative Embodiment 7 differs from Comparative Embodiment 1 in: the mixing ratio of ingredients is different, and the positive active material obtained in Comparative Embodiment 7 is the particles B with a specific surface area of 0.83 m$^2$/g. In Comparative Embodiment 7, the preparation method can be learned by referring to the preparation method in Example 17, but no element doping is performed.

The following Table 1-1 itemizes structural parameter information of the positive active materials obtained in Embodiments 1 to Embodiment 18 and Comparative Embodiment 1 to Embodiment7 as well as the electrochemical performance of the obtained electrochemical devices. Referring to Table 1-1 below, in a process from a start of delithiation of the positive active material to the delithiation percentage reaching 90%, the deviation of the 2θ angle of the (003) peak of the positive active materials obtained in Embodiments 1~18 (the deviation is a difference between a maximum value and a minimum value of the 20 angle) is less than 1.2°; in contrast, the 2θ angle of the (003) peak of the positive active materials obtained in Comparative Embodiments 1~7 is deviated to a greater extent, and is deviated by more than 1.2°. As can be learned from the electrochemical data shown in Table 1-2 below, with respect to the thickness change rate and the discharge capacity retention rate after storage at 85 °C for 24 hours, and with respect to the cycle capacity retention rate after 300 cycles are completed at 45 °C, the electrochemical performance achieved in Embodiment 1 to Embodiment 18 is significantly higher than that in Comparative Embodiment 1 to Embodiments 7.

Still referring to Table 1-1, it can be seen that all the values of $I_{H2+H3}/I_{M+H2}$ in Embodiments 1 to Embodiment 18 are less than 3, and less than the values in Comparative Embodiment 1 to Comparative Embodiment 7. This shows that the positive active materials in Embodiment 1 to Embodiment 18 of this application can effectively suppress the $H_2+H_3$ phase transition.

Further, in the process from the start of delithiation of the positive active material to the delithiation percentage reaching 90%, the variation range of the c-axis in Embodiments 1 to Embodiment 18 is within the range of 13.30 Å to 14.52 Å, and the variation range of the a-axis is in the range of 2.81 Å to 2.89 Å. More importantly, when the delithiation percentage reaches 90%, the c/a ratio value of the measured unit cell parameters c and a of the positive active materials obtained in all Embodiment 1 to Embodiment 18 is higher than 4.9, and is higher than that in Comparative Embodiment 1 to Comparative Embodiment 7, indicating that a stronger hierarchical structure is more conductive to the deintercalation and intercalation of $Li^+$.

In addition, in contrast with the initial volume of the unit cells, in the process from the start of delithiation of the positive active material to the delithiation percentage reaching 90%, the decrease percentage of the volume of the unit cells in all Embodiment 1 to Embodiment 18 is lower than 9%, and lower than the change in the volume of the unit cells in Comparative Embodiment 1 to Comparative Embodiment 7, indicating that the structure of the positive active material described in this application can remain stable during the delithiation.

**Table 1-1**

| Embodiment | Molecular formula | Deviation (°) of 2θ of (003) peak, t = 90% | $I_{H2+H3}/I_{M+H2}$ | Variation range (Å) of c-axis, t = 90% | Variation range (Å) of a-axis, t = 90% | c/a | Decrease (%) of volume of unit cell, t = 90%. |
|---|---|---|---|---|---|---|---|
| Embodiment 1 | $LiNi_{0.88}Co_{0.026}Mn_{0.087}Al_{004}Y_{0.003}O_2$ | 1.097 | 2.58 | 13.421~14.518 | 2.815~2.875 | 4.944 | 8.14% |
| Embodiment 2 | $LiNi_{0.88}Co_{0.087}Mn_{0.025}Al_{0.0005}Ti_{0.003}O_2$ | 1.083 | 2.4 | 13.433~14.516 | 2.814~2.875 | 4.942 | 8.17% |
| Embodiment 3 | $LiNi_{0.88}Co_{0.086}Mn_{0.025}Al_{0.0006}Zr_{0.002}O_2$ | 1.104 | 2.49 | 13.410~14.514 | 2.813~2.881 | 4.943 | 7.92% |
| Embodiment 4 | $LiNi_{0.882}Co_{0.088}Mn_{0.026}Zr_{0.0002}Y_{0.002}O_2$ | 1.167 | 2.67 | 13.349~14.516 | 2.814~2.879 | 4.941 | 8.35% |
| Embodiment 5 | $LiNi_{0.882}Co_{0.088}Mn_{0.026}Zr_{0.002}Ti_{0.002}O_2$ | 1.169 | 2.71 | 13.345~14.514 | 2.815~2.878 | 4.944 | 8.72% |
| Embodiment 6 | $LiN i_{0.882}Co_{0.088}Mn_{0.026}Ti_{0.0002}Al_{0.004}Zr_{0.001}O_2$ | 1.083 | 2.69 | 13.429~14.512 | 2.813~2.873 | 4.943 | 8.28% |
| Embodiment 7 | $LiNi_{0.88}Co_{0.088}Mn_{0.026}Zr_{0.002}W_{0.004}O_2$ | 1.163 | 2.54 | 13.350~14.513 | 2.813~2.875 | 4.944 | 8.47% |
| Embodiment 8 | $LiN i_{0.88}Co_{0.087}Mn_{0.03}Al_{0.001}Y_{0.002}O_2$ | 1.165 | 2.68 | 13.349~14.514 | 2.814~2.874 | 4.943 | 8.51% |
| Embodiment 9 | $LiNi_{0.88}Co_{0.085}Mn_{0.028}Al_{0.005}Y_{0.002}O_2$ | 1.157 | 2.38 | 13.355~14.512 | 2.812~2.879 | 4.944 | 8.43 % |
| Embodiment 10 | $LiNi_{0.88}Co_{0.082}Mn_{0.026}Al_{0.01}Y_{0.002}O_2$ | 0.816 | 1.91 | 13.699~14.515 | 2.812~2.876 | 4.945 | 8.11% |
| Embodiment 11 | $EiNi_{0.88}Co_{0.08}Mn_{0.023}Al_{0.015}Y_{0.002}O_2$ | 0.803 | 1.89 | 13.714~14.517 | 2.811~2.881 | 4.943 | 7.95% |
| Embodiment 12 | $LiNi_{09}Co_{0.06}Mn_{0028}Y_{0.002}Al_{0.0}O_2$ | 1.166 | 2.68 | 13.344~14.510 | 2.811~2.877 | 4.943 | 8.52% |
| Embodiment 13 | $LiNi_{0.92}Co_{0.035}Mn_{0.033}Y_{0.002}Al_{0.01}O_2$ | 1.171 | 2.71 | 13.342~14.513 | 2.813~2.878 | 4.942 | 8.57% |
| Embodiment 14 | $LiNi_{0.94}Co_{0.024}Mn_{0.024}Y_{0.002}Al_{0.01}O_2$ | 1.0 | 2.74 | 13.511~14.511 | 2.814~2.880 | 4.942 | 8.61% |

(continued)

| Embodiment | Molecular formula | Deviation (°) of 2θ of (003) peak, t = 90% | $I_{H2+H3}/I_{M+H2}$ | Variation range (Å) of c-axis, t = 90% | Variation range (Å) of a-axis, t = 90% | c/a | Decrease (%) of volume of unit cell, t = 90%. |
|---|---|---|---|---|---|---|---|
| Embodiment 15 | $LiNi_{0.96}Co_{0.014}Mn_{0.014}Y_{0.002}Al_{0.01}O_2$ | 1.185 | 2.75 | 13.332~14.517 | 2.817~2.881 | 4.941 | 8.63% |
| Embodiment 16 | $LiNi_{0.98}Co_{0.004}Mn_{0.004}Y_{0.002}Al_{0.01}O_2$ | 1.189 | 2.71 | 13.329~14.518 | 2.813~2.881 | 4.94 | 8.74% |
| Embodiment 17 | $LiNi_{0.88}Co_{0.026}Mn_{0.087}Al_{0.004}Y_{0.003}O_{2003}O_2$ | 1.096 | 2.53 | 13.422~14.518 | 2.815~2.875 | 4.943 | 8.14% |
| Embodiment 18 | $LiNi_{0.88}Co_{0.086}Mn_{0.025}Al_{0.0006}Zr_{0.002}O_2$ | 1.164 | 2.57 | 13.349~14.513 | 2.814~2.879 | 4.941 | 8.32% |
| Comparative Embodiment 1 | $LiNi_{0.88}Co_{0.09}Mn_{0.03}O_2$ | 1.283 | 3.75 | 13.234-14.517 | 2.813~2.877 | 3.854 | 9.30% |
| Comparative Embodiment 2 | $LiNi_{0.9}Co_{0.07}Mn_{0.03}O_2$ | 1.242 | 3.89 | 13.274~14.516 | 2.813~2.877 | 3.852 | 9.46% |
| Comparative Embodiment 3 | $LiNi_{0.92}Co_{0.04}Mn_{0.04}O_2$ | 1.315 | 4.56 | 13.200~14.515 | 2.812~2.876 | 3.851 | 9.51% |
| Comparative Embodiment 4 | $LiNi_{0.94}Co_{0.03}Mn_{0.03}O_2$ | 1.357 | 4.68 | 13.157~14.514 | 2.812~2.876 | 3.847 | 9.54% |
| Comparative Embodiment 5 | $LiNi_{0.96}Co_{0.02}Mn_{0.02}O_2$ | 1.579 | 5.11 | 12.934~14.513 | 2.811~2.877 | 3.844 | 9.65% |
| Comparative Embodiment 6 | $LiNi_{0.98}Co_{0.01}Mn_{0.01}O_2$ | 1.631 | 5.73 | 12.881~14.512 | 2.811~2.877 | 3.841 | 9.72% |
| Comparative Embodiment 7 | $LiNi_{0.88}Co_{0.09}Mn_{0.03}O_2$ | 1.286 | 4.53 | 13.231~14.517 | 2.813~2.877 | 3.852 | 9.40% |

**Table 1-2**

| Embodiment | Thickness change rate | Capacity retention rate at 85 °C | Cycle capacity retention rate after 300 cycles |
|---|---|---|---|
| Embodiment 1 | 27% | 98.10% | 91.70% |
| Embodiment 2 | 22% | 98.30% | 92.30% |
| Embodiment 3 | 24% | 98.05% | 91.50% |
| Embodiment 4 | 29% | 98.23% | 89.90% |
| Embodiment 5 | 28% | 98.19% | 90.20% |
| Embodiment 6 | 20% | 98.27% | 93.60% |
| Embodiment 7 | 33% | 98.13% | 92.96% |
| Embodiment 8 | 26% | 98.21% | 90.47% |
| Embodiment 9 | 24% | 98.02% | 90.88% |
| Embodiment 10 | 21% | 98.13% | 92.34% |
| Embodiment 11 | 20% | 98.09% | 92.48% |
| Embodiment 12 | 24% | 98.05% | 89.26% |
| Embodiment 13 | 25% | 98.12% | 88.72% |
| Embodiment 14 | 27% | 98.11% | 89.18% |
| Embodiment 15 | 30% | 98.16% | 88.64% |
| Embodiment 16 | 34% | 98.03% | 87.10% |
| Embodiment 17 | 21% | 98.12% | 91.75% |
| Embodiment 18 | 19% | 98.24% | 91.09% |
| Comparative Embodiment 1 | 43% | 96.90% | 63.56% |
| Comparative Embodiment 2 | 47% | 97.80% | 52.09% |
| Comparative Embodiment 3 | 51% | 96.53% | 62.48% |
| Comparative Embodiment 4 | 53% | 96.11% | 55.94% |
| Comparative Embodiment 5 | 57% | 88.45% | 51.40% |
| Comparative Embodiment 6 | 61% | 88.64% | 50.86% |
| Comparative Embodiment 7 | 33% | 86.90% | 43.52% |

**Embodiments 19 and 20**

In both Embodiments 19 and 20, a mixture of the particle A and the particle B is used as a positive active material. Specifically, a mixture of the positive active material described in Embodiment 3 and the positive active material described in Embodiment 18 is used as a positive active material in Embodiment 19, and a mixture of the positive active material described in Embodiment 4 and the positive active material described in Embodiment 21 is used as a positive active material in Embodiment 20. The total area of the particles A and the total area of the particles B are controlled by the mass of the particles A and the mass of the particles B, respectively. Table 2 shows the data such as the circularity and the cross-sectional area of the monocrystalline-like particles and the polycrystalline particles used in Embodiments 19 and 20, the total cross-sectional area of the particles A, the total cross-sectional area of the particles B, and the total area of the cross section.

**Embodiment 21**

Embodiment 21 differs from Embodiment 20 in: the positive active material in Embodiment 21 is merely quasi-monocrystals.

As can be learned from the data in Table 2, in contrast with the circumstance in which merely quasi-monocrystals (for example, Embodiments 18 and 21) or merely polycrystals (for example, Embodiments 3 and 4) are used as a positive active material, when a mixture of the quasi-monocrystals and the polycrystals (for example, Embodiments 19 and 20) is used as a positive active material, the corresponding electrochemical device can achieve more excellent electrochemical performance. For example, the electrochemical devices in Embodiments 19 and 20 have a relatively low thickness change rate and a relatively high discharge capacity retention rate and achieves better cycle performance after undergoing high-temperature storage. In addition, it is worth noting that, in contrast with the circumstance in which merely polycrystals (for example, Embodiments 3 and 4) are used as a positive active material, after monocrystalline-like particles are added into the positive active material, the degree of rupturing of the polycrystalline particles A is obviously lower. That is mainly because the monocrystals can be inserted as fillers between a plurality of polycrystalline particles to achieve a good buffering effect, reduce rigid collision between the polycrystalline particles, and mitigate ruptures of the polycrystalline particles.

**Table 2**

| Embodiment | Electrode plate porosity (%) | Percentage of particles A in the cross section (%) | Percentage of broken particles in the total area of particles A | Percentage of particles B in the cross section (%) | Ratio of the total area of particles A to the total area of particles B | Thickness change rate | Capacity retention rate | Cycle capacity retention rate after 300 cycles |
|---|---|---|---|---|---|---|---|---|
| Embodiment 3 | 22.15% | 56.98% | 50.49% | 0% | | 24% | 98.05% | 91.50% |
| Embodiment 18 | 20.03% | 0.00% | 0 | 65.80% | | 19% | 98.24% | 91.09% |
| Embodiment 19 | 19.20% | 30.20% | 5.10% | 34.80% | 86.80% | 16.71% | 98.93% | 93.70% |
| Embodiment 20 | 19.08% | 29.47% | 4.93% | 36.43% | 80.90% | 17.38% | 98.87% | 94.50% |
| Embodiment 4 | 22.19% | 57.04% | 49.67% | 0% | | 29% | 98.23% | 89.90% |
| Embodiment 21 | 19.98% | 0.00% | 0% | 67.05% | 0.00% | 20.30% | 98.14% | 89.15% |

**Embodiments 22-27**

Embodiment 22 to Embodiment 27 are improvements to the electrolytic solutions in Embodiment 10 on the basis of Embodiments 10, and differ from Embodiment 10 in: the corresponding ingredients are added into the electrolytic solution according to the corresponding content as shown in Table 3 below.

As can be learned from comparison of the electrochemical data between Embodiment 22 to Embodiment 27 and Embodiment 10, in a case that 1,3-propane sultone (PS) not more than 3 wt%, lithium difluorophosphate less than or equal 1 wt%, a specific amount of polynitrile compound, a specific amount of vinylene carbonate, or any combination thereof is added into the original electrolytic solution, the electrochemical performance of the obtained electrochemical device is further improved.

**Table 3**

| Embodiment | Molecular formula | Dosage | Thickness change rate | Capacity retention rate | Cycle capacity retention rate after 300 cycles |
|---|---|---|---|---|---|
| Embodiment 22 | $LiNi_{0.88}Co_{0.082}Mn_{0.026}Al_{0.01}Y_{0.002}O_2$ | 1% PS + 0.5% 1,3,6-hexanetricarbonitrile | 15.37% | 98.19% | 88.79% |
| Embodiment 23 | $LiNi_{0.88}Co_{0.082}Mn_{0.026}Al_{0.01}Y_{0.002}O_2$ | 1% PS + 0.45 % lithium difluorophosphate | 16.09% | 98.27% | 89.67% |
| Embodiment 24 | $L_lNi_{0.88}Co_{0.082}Mn_{0.026}Al_{0.01}Y_{0.002}O_2$ | 0.9% PS + 0.45% lithium difluorophosphate + 1% 1,3,6-hexanetricarbonitrile | 15.45% | 98.53% | 93.03% |
| Embodiment 25 | $LiNi_{0.88}Co_{0.082}M_{n0.026}Al_{0.01}Y_{0.002}O_2$ | 1% PS + 0.1% lithium difluorophosphate + 0.5% vinylene carbonate | 13.46% | 98.35% | 93.05% |
| Embodiment 26 | $LiNi_{0.88}Co_{0.082}Mn_{0.026}Al_{0.01}Y_{0.002}O_2$ | 0.5% PS + 2% 1,3,6-hexanetricarbonitrile | 11.30% | 97.57% | 91.37% |
| Embodiment 27 | $LiNi_{0.88}Co_{0.082}Mn_{0.026}Al_{0.01}Y_{0.002}O_2$ | 0.5% PS + 0.45% lithium difluorophosphate + 1.5% 1,3,6-hexanetricarbonitrile | 14.45% | 98.27% | 93.63% |
| Embodiment 10 | $LiNi_{0.88}Co_{0.082}Mn_{0.026}Al_{0.01}Y_{0.002}O_2$ | 1.5% PS + 1 .5% 1,3,6-hexanetricarbonitrile | 21% | 98.13% | 92.34% |

References to "embodiments", "some embodiments", "an embodiment". "another example", "example", "specific example" or "some examples" throughout the specification mean that at least one embodiment or example in this application includes specific features, structures, materials, or characteristics described in the embodiment(s) or example(s). Therefore, descriptions throughout the specification, which make references by using expressions such as "in some embodiments", "in an embodiment", "in one embodiment", "in another example", "in an example", "in a specific example", or "example", do not necessarily refer to the same embodiment(s) or example(s) in this application. In addition, specific features, structures, materials, or characteristics herein may be combined in one or more embodiments or examples in any appropriate manner.

Although illustrative embodiments have been demonstrated and described above, a person skilled in the art understands that the above embodiments shall not be construed as a limitation on this application, and changes, replacements, and modifications may be made to the embodiments without departing from the spirit, principles, and scope of this application.

**Claims**

1. A positive active material, wherein, based on an initial lithium content of the positive active material, a delithiation percentage of the positive active material is t, and

   in a process from a start of delithiation of the positive active material to the delithiation percentage reaching t, a difference between a maximum value and a minimum value of a $2\theta$ angle of a (003) peak of the positive active material in an in-situ X-ray diffraction pattern is not greater than 1.2°,

   wherein $80\% \leq t \leq 93\%$.

2. The positive active material according to claim 1, wherein, in the process from the start of delithiation of the positive active material to the delithiation percentage reaching t, a range of a unit cell parameter c is 13.30 Å to 14.52 Å, and a range of a unit cell parameter a is 2.81 Å to 2.89 Å.

3. The positive active material according to claim 2, wherein, in a fully charged state, a range of a ratio of the unit cell parameter c to the unit cell parameter a is 4.86 to 4.95.

4. The positive active material according to claim 1, wherein the positive active material is of a hexagonal crystal structure; and, based on a volume of a unit cell of the positive active material in a fully discharged state, a decrease percentage of the volume of the unit cell is less than or equal to 9% in the process from the start of delithiation of the positive active material to the delithiation percentage reaching t.

5. The positive active material according to claim 1,

   wherein, in a DQ/DV curve at a 0.1 C-rate, a first oxidation peak exists between 4.15 V and 4.25 V, a second oxidation peak exists between 3.85 V and 4.1 V, a peak intensity of the first oxidation peak is $I_{H2+H3}$, a peak intensity of the second oxidation peak is $I_{M+H2}$, and $0 < I_{H2+H3}/I_{M+H2} \leq 3$.

6. The positive active material according to claim 1, wherein the positive active material comprises at least one compound represented by a formula $Li_{1+a}Ni_xMn_yCo_zM_{1-x-y-z}O_2$, wherein $-0.05 \leq a < 0.1$, $0.8 < x < 1$, $0 < y \leq 0.15$, $0 < z \leq 0.15$, $0.9 \leq x+y+z < 1$, M includes at least two selected from the group consisting of Ti, W, Al, Nb, Mo, Sb, Zr, Ru, Ge, Y, La, Sr, Mg, In, and Ce, and a specific surface area of the positive active material is 0.1 $m^2$/g to 1.2 $m^2$/g.

7. An electrochemical device, comprising a positive electrode and an electrolytic solution, wherein the positive electrode comprises a positive active material layer and a positive current collector, and the positive active material layer comprises the positive active material , based on an initial lithium content of the positive active material, a delithiation percentage of the positive active material is t, and in a process from a start of delithiation of the positive active material to the delithiation percentage reaching t, a difference between a maximum value and a minimum value of a $2\theta$ angle of a (003) peak of the positive active material in an in-situ X-ray diffraction pattern is not greater than 1.2°, wherein $80\% \leq t \leq 93\%$.

8. The electrochemical device according to claim 7, wherein in the process from the start of delithiation of the positive active material to the delithiation percentage reaching t, a range of a unit cell parameter c is 13.30 Å to 14.52 Å, and a range of a unit cell parameter a is 2.81 Å to 2.89 Å.

9. The electrochemical device according to claim 8, wherein, in a fully charged state, a range of a ratio of the unit cell parameter c to the unit cell parameter a is 4.86 to 4.95.

10. The electrochemical device according to claim 7, wherein the positive active material is of a hexagonal crystal structure; and, based on a volume of a unit cell of the positive active material in a fully discharged state, a decrease percentage of the volume of the unit cell is less than or equal to 9% in the process from the start of delithiation of the positive active material to the delithiation percentage reaching t.

11. The electrochemical device according to claim 7, wherein, in a DQ/DV curve at a 0.1 C-rate, a first oxidation peak exists between 4.15 V and 4.25 V, a second oxidation peak exists between 3.85 V and 4.1 V, a peak intensity of the first oxidation peak is $I_{H2+H3}$, a peak intensity of the second oxidation peak is $I_{M+H2}$, and $0 < I_{H2+H3}/I_{M+H2} \leq 3$.

12. The electrochemical device according to claim 7, wherein the positive active material layer comprises a particle A and a particle B, a circularity of the particle A is $R_A$, a cross-sectional area of the particle A is $S_A$; a circularity of the particle B is $R_B$, a cross-sectional area of the particle B is $S_B$, $R_B < 0.4 \leq R_A$ and $S_B < 20 \ \mu m^2 \leq S_A$; and, based on a total area of a cross section of the positive active material layer in a direction perpendicular to the positive current collector, a ratio of a total area of the particle A to a total area of the particle B is in a range of 1:9 to 8:2.

13. The electrochemical device according to claim 12, wherein a percentage of the total area of the particle A in the total area of the cross section of the positive active material layer in the direction perpendicular to the positive current collector is 5% to 40%.

14. The electrochemical device according to claim 7, wherein the electrolytic solution comprises at least one of 1,3-propane sultone or lithium difluorophosphate,
wherein, based on a total mass of the electrolytic solution, a range of a mass percent of the 1,3-propane sultone is 0.01% to 3%, and a range of a mass percent of the lithium difluorophosphate is 0.001% to 1%.

15. An electronic device, comprising the electrochemical device according to any one of claims 7 to 14.

FIG. 1

FIG. 2

EP 3 885 321 A1

Al element          Y element

FIG. 3

FIG. 4A                    FIG. 4B

Europäisches
Patentamt

European
Patent Office

Office européen
des brevets

# EUROPEAN SEARCH REPORT

Application Number

EP 21 16 4263

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHANDAN GHANTY ET AL: "Li + -Ion Extraction/Insertion of Ni-Rich Li 1+ x (Ni y Co z Mn z ) w O 2 (0.005< x <0.03; y : z =8:1, w ~ 1) Electrodes: In?Situ XRD and Raman Spectroscopy Study", CHEMELECTROCHEM, vol. 2, no. 10, 1 October 2015 (2015-10-01), pages 1479-1486, XP055554896, Chichester ISSN: 2196-0216, DOI: 10.1002/celc.201500160 * the whole document * | 1-15 | INV. C01G53/00 H01M4/525 H01M10/0525 |
| X | EP 3 376 573 A1 (NEC ENERGY DEVICES LTD [JP]) 19 September 2018 (2018-09-19) * paragraphs [0017] - [0029] * * figure 2; example 1 * | 1-15 | |
| X | CN 108 123 128 A (BEIJING INSTITUTE TECH) 5 June 2018 (2018-06-05) * examples * * claims * | 1-15 | TECHNICAL FIELDS SEARCHED (IPC) |
| X | CN 109 768 232 A (GUANGDONG BRUNP RECYCLING TECHNOLOGY CO LTD ET AL.) 17 May 2019 (2019-05-17) * example 5 * * claims * | 1-15 | C01G H01M |

The present search report has been drawn up for all claims

| Place of search | Date of completion of the search | Examiner |
|---|---|---|
| Munich | 18 August 2021 | Besana, Sonia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 4263

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2021

| Patent document cited in search report | | Publication date | Patent family member(s) | Publication date |
|---|---|---|---|---|
| EP 3376573 | A1 | 19-09-2018 | CN 108140830 A<br>EP 3376573 A1<br>JP WO2017082083 A1<br>US 2018294514 A1<br>WO 2017082083 A1 | 08-06-2018<br>19-09-2018<br>23-08-2018<br>11-10-2018<br>18-05-2017 |
| CN 108123128 | A | 05-06-2018 | NONE | |
| CN 109768232 | A | 17-05-2019 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG WEIDONG ; QIU WEIHUA ; DING QIAN-QIAN et al.** Ternary Material of Lithium-ion Batteries-Process Technology and Application in Production. Chemical Industry Press, May 2015